# EUROPÄISCHE PATENTANMELDUNG

(11) **EP 4 573 878 A1**
(43) Veröffentlichungstag der Anmeldung: **25.06.2025**
(21) Anmeldenummer: 24211989.9
(22) Anmeldetag: 11.11.2024
(51) Int. Cl.: A01D 45/02

(54) **PFLÜCKWALZENEINHEIT FÜR EIN VORSATZGERÄT ZUM ERNTEN VON STÄNGELIGEM ERNTEGUT**

(30) Priorität: 19.12.2023 DE 102023135749
(71) Anmelder: CLAAS Selbstfahrende Erntemaschinen GmbH, 33428 Harsewinkel (DE)
(72) Erfinder: Lütke Harmann, Tim, 48324 Sendenhorst (DE)
(74) Vertreter: CLAAS Gruppe

(57) **Zusammenfassung**

Die vorliegende Erfindung betrifft eine Pflückwalzeneinheit (6) für ein Vorsatzgerät zum Ernten von stängeligem Erntegut, wobei die Pflückwalzeneinheit (6) ein Paar gegensinnig angetriebener Pflückwalzen (71, 7r) umfasst, auf denen jeweils vier erste Werkzeuge (15) zur Längsachse (LA) der Pflückwalzen (7l, 7r) drehsymmetrisch angeordnet sind, wobei die ersten Werkzeuge (15) in radialer Richtung hervorstehende, abgewinkelte Kanten (17) aufweisen, deren Hüllkreise (23) ineinander kämmen, wobei benachbarte Kanten (17) der einen Pflückwalze (7l, 7r) zwischen sich innerhalb des Hüllkreises (23) gelegene Zwischenräume (24), die sich entlang der Längsrichtung der Pflückwalze (7l, 7r) erstrecken und in welche die Kanten (17) der benachbart gegenüberliegenden Pflückwalze (7l, 7r) während eines Umlaufs der beiden Pflückwalzen (7l, 7r) eintauchen, begrenzen, wobei nur auf einer der beiden Pflückwalzen (7l, 7r) zusätzlich zwei zweite Werkzeuge (18) angeordnet sind, die um 180° drehsymmetrisch zur Längsachse (LA) der Pflückwalze (7l, 7r) angeordnet sind.

## Beschreibung

Die vorliegende Erfindung betrifft eine Pflückwalzeneinheit für ein Vorsatzgerät zum Ernten von stängeligem Erntegut gemäß dem Oberbegriff des Anspruches 1. Weiterhin sind ein Vorsatzgerät zum Ernten von stängeligem Erntegut sowie eine selbstfahrende Erntemaschine Gegenstand der vorliegenden Erfindung.

Eine Pflückwalzeneinheit für ein Vorsatzgerät der eingangs genannten Art ist aus der EP 3 829 289 B1 bekannt. Die darin beschriebene Pflückwalzeneinheit für ein Vorsatzgerät zum Ernten von stängeligem Erntegut, umfasst ein Paar gegensinnig angetriebener Pflückwalzen, auf denen jeweils vier erste Werkzeuge zur Längsachse der Pflückwalzen drehsymmetrisch angeordnet sind. Die ersten Werkzeuge weisen in radialer Richtung hervorstehende, abgewinkelte Einzugskanten auf, deren Hüllkreise ineinander kämmen, wobei benachbarte Einzugskanten der einen Pflückwalze zwischen sich innerhalb des Hüllkreises gelegene Zwischenräume, die sich entlang der Längsrichtung der Pflückwalze erstrecken und in welche die Einzugskanten der benachbart gegenüberliegenden Pflückwalze während eines Umlaufs der beiden Pflückwalzen eintauchen, begrenzen. Auf den Pflückwalzen sind jeweils zusätzlich zwei zweite Werkzeuge angeordnet, die als Messerklingen ausgeführt sind. Die beiden Messerklingen sind einander gegenüberliegend auf der jeweiligen Pflückwalze angeordnet und erstrecken sich in den Zwischenraum zwischen den Einzugskanten benachbarter erster Werkzeuge. Die beiden Messerklingen haben einen kleineren Hüllkreis als die Einzugskanten. Die ersten und zweiten Werkzeuge der benachbarten Pflückwalzen müssen alternierend zueinander angeordnet sein, sodass die Einzugskanten ineinander kämmen und jeweils eine Messerklinge in den Wirkbereich ineinandergreifender Einzugskörper eindringt. Mithin ist bei der Montage darauf zu achten, dass zumindest die Messerklingen benachbarter Pflückwalzen alternierend zueinander angeordnet sind, wodurch der Montageaufwand erhöht und fehleranfällig ist.

Ausgehend vom vorstehend genannten Stand der Technik liegt der Erfindung die Aufgabe zugrunde, eine Pflückwalzeneinheit für ein Vorsatzgerät zum Ernten von stängeligem Erntegut weiterzubilden, welche sich durch eine vereinfachte Montage auszeichnet.

Diese Aufgabe wird erfindungsgemäß durch eine Pflückwalzeneinheit für ein Vorsatzgerät zum Ernten von stängeligem Erntegut mit den Merkmalen des Anspruches 1, ein Vorsatzgerät zum Ernten von stängeligem Erntegut mit den Merkmalen des Anspruches 14 sowie eine selbstfahrende Erntemaschine mit den Merkmalen des Anspruches 15 gelöst. Vorteilhafte Weiterbildungen sind Gegenstand der abhängigen Ansprüche.

Gemäß dem Anspruch 1 wird eine Pflückwalzeneinheit für ein Vorsatzgerät zum Ernten von stängeligem Erntegut vorgeschlagen, wobei die Pflückwalzeneinheit ein Paar gegensinnig angetriebener Pflückwalzen umfasst, auf denen jeweils vier erste Werkzeuge zur Längsachse der Pflückwalzen drehsymmetrisch angeordnet sind, wobei die ersten Werkzeuge in radialer Richtung hervorstehende, abgewinkelte Kanten aufweisen, deren Hüllkreise ineinander kämmen, wobei benachbarte Kanten der einen Pflückwalze zwischen sich innerhalb des Hüllkreises gelegene Zwischenräume, die sich entlang der Längsrichtung der Pflückwalze erstrecken und in welche die Kanten der benachbart gegenüberliegenden Pflückwalze während eines Umlaufs der beiden Pflückwalzen eintauchen, begrenzen. Erfindungsgemäß ist vorgesehen, dass nur auf einer der beiden Pflückwalzen zusätzlich zwei zweite Werkzeuge angeordnet sind, die um 180° drehsymmetrisch zur Längsachse der Pflückwalze angeordnet sind.

Dadurch ist die eine Pflückwalze 90° drehsymmetrisch ausgeführt, was die Montage an einem Pflückgetriebe vereinfacht, da vier Positionen zur anderen, die beiden zusätzlichen zweiten Werkzeuge aufweisenden, Pflückwalze möglich sind. Damit kann bei der Montage auch ohne definierte Positionierung von Antriebswellen der Pflückeinheit eine ausreichend genaue Position der Pflückwalzen zueinander gefunden werden.

Insbesondere kann das jeweilige erste Werkzeug zwei abgewinkelte Kanten und das zweite Werkzeug eine in radialer Richtung hervorstehende Kante aufweisen.

Bevorzugt kann die Kante des zweiten Werkzeugs mit einer benachbarten Kante des ersten Werkzeugs zwischen sich einen innerhalb des Hüllkreises gelegenen Zwischenraum einschließen, in welchen eine der Kanten des ersten Werkzeugs der benachbart gegenüberliegenden Pflückwalze während eines Umlaufs der beiden Pflückwalzen eintaucht. Hierdurch kann die wirksame Anzahl von Schneid- und Reißvorgänge pro Umdrehung der Pflückwalzen erhöht werden.

Hierbei ist es vorteilhat, dass die Kanten der ersten Werkzeuge und der zweiten Werkzeuge einen identischen Hüllkreis haben.

So kann eine Kante der die vier ersten Werkzeuge aufweisenden Pflückwalze in den Zwischenraum zwischen den benachbarten Kanten der anderen Pflückwalze eintauchen und zusätzlich kann die benachbarte Kante der die vier ersten Werkzeuge aufweisenden Pflückwalze in den Zwischenraum zwischen der Kante des ersten Werkzeugs und der benachbarten Kante des zweiten Werkzeugs der anderen Pflückwalze eindringen.

Bevorzugt können die Kanten der ersten Werkzeuge und der zweiten Werkzeuge die Funktionen des Einziehens und Schneidens vereinen.

Insbesondere können die ersten Werkzeuge der beiden Pflückwalzen einen im Wesentlichen wannenförmigen Querschnitt aufweisen und nach oben offenen ausgeführt sein.

Des Weiteren können die ersten Werkzeuge einen Basisabschnitt aufweisen und beiderseits des Basisabschnitts die beiden abgewinkelt angeordneten Kanten.

Gemäß einer bevorzugten Weiterbildung können die beiden abgewinkelten Kanten des ersten Werkzeugs einen gezahnten ersten Abschnitt aufweisen, an den sich ein als durchgehende Schneidkante ausgebildeter zweiter Abschnitt anschließen kann. Die Zahnung des ersten Abschnitts erleichtert es den Kanten, sich während des Durchgangs des Halms durch den Klemmspalt in den Halm einzudrücken und so durch Aufreißen von dessen Außenhaut eine zügige Verrottung des Marks zu ermöglichen, so dass dieses als Unterschlupf für Schädlinge ungeeignet wird.

Weiter bevorzugt können die zweiten Werkzeuge einen Basisabschnitt aufweisen, an dem die eine Kante des zweiten Werkzeugs abgewinkelt angeordnet ist.

Dabei kann die abgewinkelte Kante des zweiten Werkzeugs einen gezahnten ersten Abschnitt aufweisen, an den sich ein als durchgehende Schneidkante ausgebildeter zweiter Abschnitt anschließen kann.

Alternativ kann die abgewinkelte Kante des zweiten Werkzeugs einen als durchgehende Schneidkante ausgebildeten Abschnitt aufweisen. Hierbei können der erste Abschnitt und der zweite Abschnitt als durchgehende Schneidkante ausgebildet sein.

Bevorzugt können die abgewinkelten Kanten des ersten Werkzeugs gegen den Basisabschnitt um einen Winkel größer 90° abgewinkelt sein und die eine abgewinkelte Kante des zweiten Werkzeugs kann gegen den Basisabschnitt um einen Winkel größer 90° abgewinkelt sein, wobei der Winkel der einen abgewinkelten Kante des zweiten Werkzeugs kleiner als der Winkel der abgewinkelten Kanten des ersten Werkzeugs ist. Hierdurch kann sich zwischen einer abgewinkelten Kante des ersten Werkzeugs und der hierzu benachbarten abgewinkelten Kante des zweiten Werkzeugs der Zwischenraum ausbilden.

Insbesondere können sich der erste Abschnitt des ersten Werkzeugs und der erste Abschnitt des zweiten Werkzeugs über mindestens die Hälfte der Länge der Pflückwalzen oder ihrer abgewinkelten Kanten erstrecken.

Gemäß dem nebengeordneten Anspruch 14 wird ein Vorsatzgerät zum Ernten von stängeligem Erntegut vorgeschlagen, welche zumindest eine Pflückwalzeneinheit umfasst, wobei die Pflückwalzeneinheit nach einem der Ansprüche 1 bis 13 ausgeführt ist. Eine selbstfahrende Erntemaschine mit einem Vorsatzgerät zum Ernten von stängeligem Erntegut ist zur Lösung der eingangs gestellten Aufgabe mit einem Vorsatzgerät nach Anspruch 15 ausgeführt. Auf die Vorteile der erfindungsgemäßen Pflückwalzeneinheit darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch ein Vorsatzgerät zum Ernten von stängeligem Erntegut;
- Fig. 2: schematisch und exemplarisch eine Pflückwalzen einer Pflückwalzeneinheit in perspektivischer Ansicht von vorne;
- Fig. 3: die Pflückwalzen gemäß Fig. 3 im axialen Schnitt; und
- Fig. 4: schematisch und exemplarisch die Pflückwalzen im Schnitt in einer Phase ihrer Drehung.

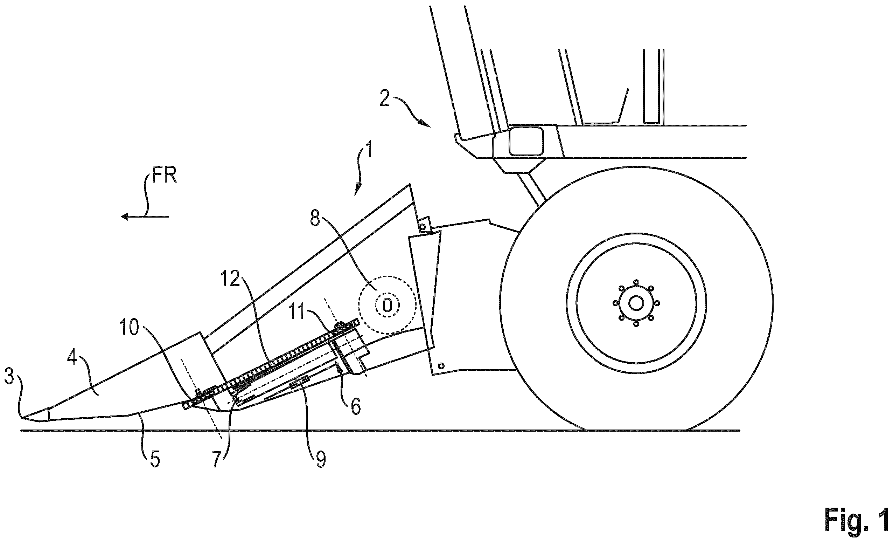

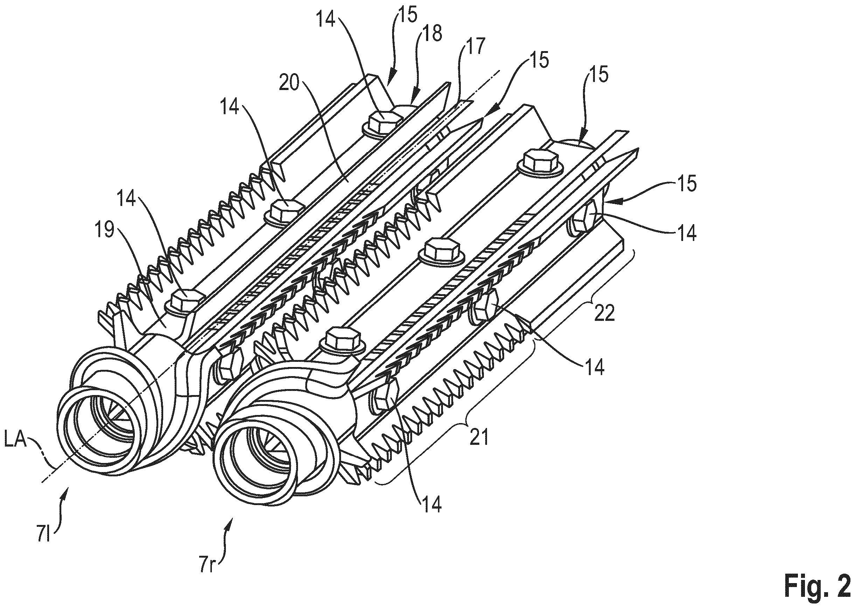

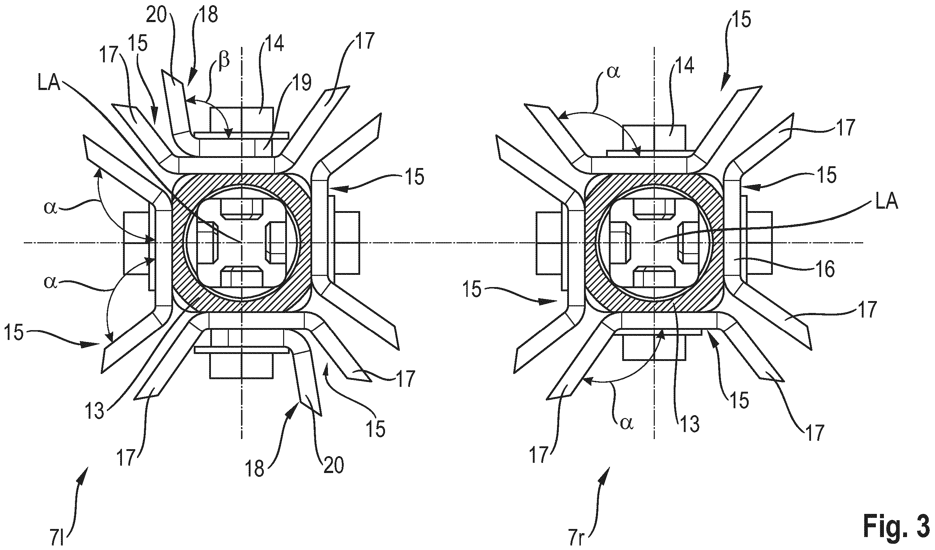

Fig. 1 zeigt schematisch und exemplarisch ein Vorsatzgerät 1 zum Ernten von stängeligem Erntegut, welches in seinem rückwärtigen Bereich an einer nicht näher dargestellten selbstfahrenden Erntemaschine 2, vorzugsweise einem Mähdrescher oder Feldhäcksler, adaptiert ist. Entlang einer Vorderkante des Vorsatzgerätes 1 ist eine Reihe von sich jeweils von einer vorderen Spitze 3 aus nah hinten ähnlich einem halben Kegel verbreiternden Führungshauben 4 angeordnet. Seitliche Flanken 5 von zwei benachbarten Führungshauben 4 laufen jeweils nach hinten aufeinander zu, um in einen Gutannahmebereich zwischen den Führungshauben 4 einrückende Halme oder Stängel, wenn nötig, seitwärts zu verschieben und so einem an den Gutannahmebereich entgegen der Fahrtrichtung FR anschließenden Einzugsspalt zuzuführen. Der Einzugsspalt ist beiderseits von einander gegenüberliegend angeordneten Pflückplatten begrenzt, die in einer horizontal verlaufenden Ebene angeordnet sind. Unter den Pflückplatten erstrecken sich beiderseits des Einzugsspalts ein- oder mehrteilig ausgeführte zylindrische oder konische Pflückwalzen 7 einer Pflückwalzeneinheit 6, die über ihren Umfang verteilt angeordnete, sich in axialer Richtung der Pflückwalzen 7l, 7r langgestreckte Kanten 17, 20 aufweisen, wie in Fig. 2 und Fig. 3 dargestellt. Die langgestreckten Kanten 17 sind an einem ersten Werkzeug 15 und die langgestreckten Kanten 20 an einem zweiten Werkzeug 18 ausgebildet.

Die Pflückwalzen 7l, 7r der Pflückwalzeneinheit 6 sind gegenläufig angetrieben, um einen in den Einzugsspalt an dessen vorderem Ende eingetretenen Halm oder Stängel einzuklemmen, durch den Einzugsspalt nach unten zu ziehen und so dessen Fruchtstände an Längskanten des Einzugsspalts abzustreifen. Eine sich in Fahrtrichtung FR hinter den Pflückplatten angeordnete Förderschnecke 8 mit quer zur Fahrtrichtung FR orientierter Drehachse sammelt die Fruchtstände und führt sie der Erntemaschine 2 zur weiteren Verarbeitung zu.

Indem im Laufe der Drehung der Pflückwalzen 7l, 7r abgewinkelte Kanten 17, 20 der einen Pflückwalze 7l in Zwischenräume 24 zwischen benachbarte Kanten 17 der anderen Pflückwalze 7r eingreifen, wird der Halm gequetscht und vielfach geknickt, je nach Ausgestaltung der Kanten 17, 20 eventuell auch angeschnitten, bleibt aber als solcher einstückig erhalten. Unterhalb der Pflückwalzen 7l, 7r kann ein optionales Häckselwerk 9 vorgesehen sein, um den Halm zu häckseln und das resultierende Häckselgut unter dem Vorsatzgerät 1 zu verstreuen. Das Häckselwerk 9 kann ein oder mehrere mit Messern besetzte Rotoren umfassen, die um jeweils eine in einer vertikalen Ebene senkrecht zur Längsrichtung des Einzugsspalts verlaufende Achse rotieren.

Weiterhin zeigt Fig. 1 schematisch vordere und hintere Umlenkrollen 10, 11, die zwischen sich eine endlos umlaufende Förderkette 12 aufgespannt halten. Ein solches Paar von Umlenkrollen 10, 11 und die daran umlaufende Förderkette 12 sind unter jeder der beiden den Einzugspalt begrenzenden Pflückplatten vorgesehen. Die beiden Förderketten 12 tragen jeweils eine Mehrzahl von Fingern, die von der Seite her in den Einzugsspalt hinein vorspringen, um Halme, die in dem Einzugsspalt stecken, zu fassen und nach hinten, zur Förderschnecke 8, zu schieben. So wandern die Halme, während sie von den Pflückwalzen 7l, 7r nach unten gezogen werden, gleichzeitig entlang des Einzugsspalts nach hinten.

In Fig. 2 ist schematisch und exemplarisch eine der Pflückwalzeneinheiten 6 des Vorsatzgerätes 1 in perspektivischer Ansicht von vorne dargestellt.

Fig. 2 zeigt ein Paar der Pflückwalzen 7l, 7r der Pflückwalzeneinheit 6 in einer perspektivischen Ansicht schräg von vorn, und Fig. 3 zeigt dasselbe Paar von Pflückwalzen 7l, 7r im axialen Schnitt. Dabei ist das Paar Pflückwalzen 7l, 7r in Fig. 3 zueinander beabstandet dargestellt.

Ein rohrförmiger Walzenkern 13 der Pflückwalzen 7l, 7r hat einen vieleckigen oder an mehreren Stellen seines Umfangs abgeflachten Querschnitt, wobei die Anzahl der Seiten des Vielecks oder abgeflachten Stellen der Pflückwalzen 7l, 7r der Anzahl von an dem Walzenkern 13 mittels Schraubverbindungen 14 befestigten ersten Werkzeugen 15 entspricht. Bevorzugt und wie in den Figuren 2 bis 4 dargestellt beträgt die Anzahl der ersten Werkzeugen 15, die auf den Pflückwalzen 7l, 7r befestigt sind, vier. Die jeweils vier ersten Werkzeuge 15 sind zur Längsachse LA der Pflückwalzen 7l, 7r um 90° drehsymmetrisch angeordnet.

Die ersten Werkzeuge 15 sind jeweils durch Biegen eines Flachmaterialstreifens erhalten. Die ersten Werkzeuge 15 der beiden Pflückwalzen 7l, 7r weisen einen im Wesentlichen wannenförmigen Querschnitt auf und sind nach oben offenen ausgeführt. Um die gezeigte Form mit einem ebenen Basisabschnitt 16 und beiderseits des Basisabschnitts 16 geradlinig abgewinkelten Kanten 17 zu formen, genügt es, den Flachmaterialstreifen mit einem an dem Basisabschnitt 16 anliegenden Stempel in ein rinnenförmiges Gesenk hineinzupressen. Die abgewinkelten Kanten 17 des ersten Werkzeugs 15 sind gegen den Basisabschnitt 16 um einen Winkel α größer 90° abgewinkelt.

Die ersten Werkzeuge 15 sind baugleich ausgeführt, d.h. sie unterscheiden sich hinsichtlich ihrer Ausgestaltung nicht voneinander. Die ersten Werkzeugen 15 werden auf beiden Pflückwalzen 7l, 7r angeordnet.

Wenn die ersten Werkzeugen 15 an den Pflückwalzen 7l, 7r montiert sind, fungieren ihre abgewinkelten Kanten 17 als Mitnehmerrippen, die von entgegengesetzten Seiten her an in dem Einzugsspalt gehaltenen Halmen angreifen, um sie durch den Einzugsspalt hindurchzuziehen, sie dabei vielfach zu knicken und zumindest in ihrem unteren, stärkeren Teil aufzureißen.

Auf einer der beiden Pflückwalzen 7l, 7r, hier beispielhaft der Pflückwalze 7l, sind zwei zweite Werkzeuge 18 angeordnet. Die beiden zweiten Werkzeuge 18 sind um 180° drehsymmetrisch zur Längsachse LA der Pflückwalze 7l angeordnet. Das zweite Werkzeug 18 weist einen Basisabschnitt 19 auf, an dem nur eine abgewinkelte Kante 20 angeordnet ist. Die abgewinkelte Kante 20 des zweiten Werkzeugs 18 ist gegen den Basisabschnitt 19 um einen Winkel β größer 90° abgewinkelt. Der Winkel β der abgewinkelten Kante 20 des zweiten Werkzeugs 18 ist jedoch kleiner als der Winkel α der abgewinkelten Kante 17 des ersten Werkzeugs 15.

Das jeweilige zweite Werkzeug 18 ist auf dem Basisabschnitt 16 an dem darunterliegend angeordneten wannenförmigen ersten Werkzeug 15 angeordnet. Die Befestigung des zweiten Werkzeugs 18 auf dem Basisabschnitt 16 des ersten Werkzeugs 15 der Pflückwalze 7l kann mittels der Schraubverbindungen 14 erfolgen.

Da die beiden Pflückwalze 7l, 7r sowie die ersten Werkzeuge 15 baugleich ausgeführt sind, kann die Anordnung der ebenfalls baugleichen zweiten Werkzeuge 18 auch auf der Pflückwalze 7r anstelle der Pflückwalze 7l erfolgen.

Wie in Fig. 2 zu erkennen, sind die abgewinkelten Kanten 17 der ersten Werkzeuge 15 jeweils längs unterteilt in einen vorderen, d.h. einem Gutannahmebereich zugewandten, gezahnten ersten Abschnitt 21 und einen hinteren, als gerade Schneidkante ausgebildeten zweiten Abschnitt 22. Zähne des gezahnten ersten Abschnitt 21 können unter geringerem Kraftaufwand in einen den Klemmspalt durchlaufenden Halm als eine gerade Klinge eindringen, was insbesondere in einem vorderen Bereich der Pflückwalzen 7l, 7r von Vorteil ist, der mit einem unteren, relativ kräftigen Teil der Halme wechselwirkt.

Die abgewinkelte Kante 20 des zweiten Werkzeugs 18 kann ebenfalls einen gezahnten ersten Abschnitt 21 aufweisen, an den sich ein als durchgehende Schneidkante ausgebildeter zweiter Abschnitt 22 anschließt. Denkbar ist auch, dass der erste Abschnitt 21 und der zweite Abschnitt 22 der abgewinkelten Kante 20 des zweiten Werkzeugs 18 als ein Abschnitt mit einer durchgehenden Schneidkante ausgebildet sind.

Bevorzugt erstreckt sich der erste Abschnitt 21 des ersten Werkzeugs 15 über mindestens die Hälfte der Länge der Pflückwalzen 7l, 7r oder ihrer Kanten 17. Weiter bevorzugt kann sich der erste Abschnitt 21 des zweiten Werkzeugs 18 über mindestens die Hälfte der Länge der Pflückwalze 7l oder 7r oder ihrer Kante 20 erstrecken.

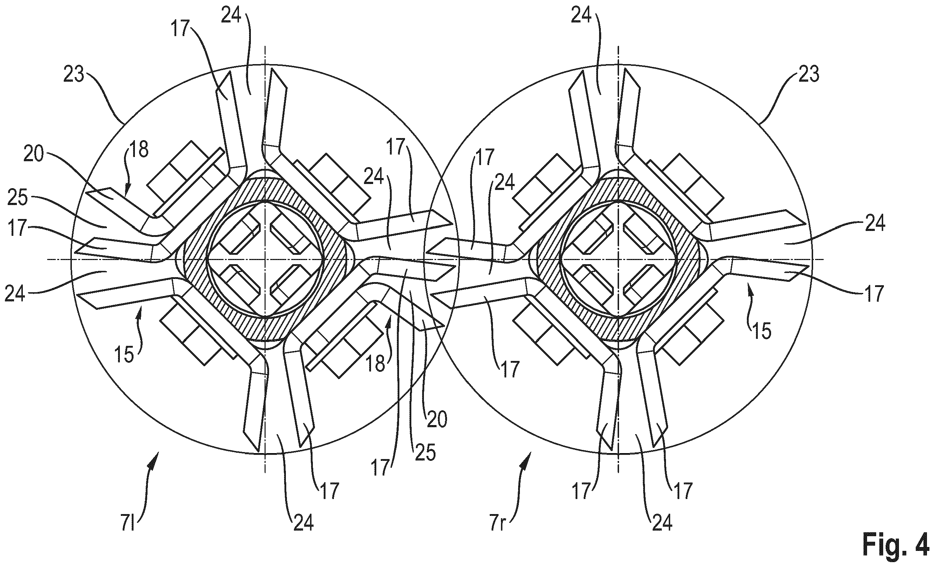

In Fig. 4 sind schematisch und exemplarisch die Pflückwalzen 7l, 7r im Schnitt in einer Phase ihrer Drehung dargestellt. Bei ihrer Drehbewegung beschreiben die Pflückwalzen 7l, 7r mit ihren Kanten 17, 20 jeweils einen Hüllkreis 23. Die Hüllkreise 23 der in radialer Richtung hervorstehenden, abgewinkelten Kanten 17 der ersten Werkzeug 15 der Pflückwalzen 7l, 7r kämmen ineinander. Benachbarte Kanten 17 der ersten Werkzeuge 15 der Pflückwalzen 7l, 7r begrenzen zwischen sich innerhalb des Hüllkreises 23 gelegene Zwischenräume 24. Die Zwischenräume 24 erstrecken sich entlang der Längsrichtung der jeweiligen Pflückwalze 7l, 7r. Die Kanten 17 der ersten Werkzeuge 15 der Pflückwalzen 7l, 7r tauchen dabei während eines Umlaufs der beiden Pflückwalzen 7l, 7r in die Zwischenräume 24 ein.

Die Kante 20 des zweiten Werkzeugs 18 schließt mit einer benachbarten Kante 17 des ersten Werkzeugs 15 auf der Pflückwalze 7r zwischen sich einen zusätzlichen innerhalb des Hüllkreises 23 gelegenen Zwischenraum 25 ein. In diesen Zwischenraum 25 taucht eine der Kanten 17 des ersten Werkzeugs 15 der benachbart gegenüberliegenden Pflückwalze 7r während eines Umlaufs der beiden Pflückwalzen 7l, 7r ein. Hierdurch wird eine Verbesserung der Schneid-, Reiß- und/oder Knickwirkung der Pflückwalzeneinheit 6 erreicht. Die Anzahl von wirksamen Schneide- bzw. Reißvorgänge während einer Umdrehung kann durch die erfindungsgemäße Pflückwalzeneinheit 6 erhöht werden.

Wie weiter oben bereits ausgeführt, sind auf der einen Pflückwalze 7r vier baugleiche erste Werkzeuge 15 angebracht. Auf der anderen Pflückwalze 7l sind zusätzlich zu den vier baugleichen ersten Werkzeugen 15 zwei zweite Werkzeuge 18 um 180° drehsymmetrisch angebracht, um die wirksame Anzahl der Schneidkanten pro Umdrehung zu erhöhen. Dadurch ist die eine Pflückwalze 7r um 90° drehsymmetrisch, was die Montage am Pflückgetriebe des Vorsatzgerätes 1 vereinfacht, da vier Positionen zur anderen Pflückwalze 7l möglich sind. Damit kann bei der Montage auch ohne definierte Positionierung der Antriebswellen der Pflückwalzeneinheit 6 eine ausreichend genaue Position der Pflückwalzen 7l, 7r zueinander gefunden werden.

### Bezugszeichenliste

- 1: Vorsatzgerät
- 2: Erntemaschine
- 3: Spitze
- 4: Führungshaube
- 5: Flanke
- 6: Pflückwalzeneinheit
- 7l: Pflückwalze
- 7r: Pflückwalze
- 8: Förderschnecke
- 9: Häckselwerk
- 10: Umlenkrolle
- 11: Umlenkrolle
- 12: Förderkette
- 13: Walzenkern
- 14: Schraubverbindung
- 15: Erstes Werkzeug
- 16: Basisabschnitt
- 17: Kante
- 18: Zweites Werkzeug
- 19: Basisabschnitt
- 20: Kante
- 21: Erster Abschnitt
- 22: Zweiter Abschnitt
- 23: Hüllkreis
- 24: Zwischenraum
- 25: Zwischenraum

- FR: Fahrtrichtung
- LA: Längsachse
- α: Winkel
- β: Winkel

## Patentansprüche

1. Pflückwalzeneinheit (6) für ein Vorsatzgerät zum Ernten von stängeligem Erntegut, wobei die Pflückwalzeneinheit (6) ein Paar gegensinnig angetriebener Pflückwalzen (7l, 7r) umfasst, auf denen jeweils vier erste Werkzeuge (15) zur Längsachse (LA) der Pflückwalzen (7l, 7r) drehsymmetrisch angeordnet sind, wobei die ersten Werkzeuge (15) in radialer Richtung hervorstehende, abgewinkelte Kanten (17) aufweisen, deren Hüllkreise (23) ineinander kämmen, wobei benachbarte Kanten (17) der einen Pflückwalze (7l, 7r) zwischen sich innerhalb des Hüllkreises (23) gelegene Zwischenräume (24), die sich entlang der Längsrichtung der Pflückwalze (7l, 7r) erstrecken und in welche die Kanten (17) der benachbart gegenüberliegenden Pflückwalze (7l, 7r) während eines Umlaufs der beiden Pflückwalzen (7l, 7r) eintauchen, begrenzen, **dadurch gekennzeichnet, dass** nur auf einer der beiden Pflückwalzen (7l, 7r) zusätzlich zwei zweite Werkzeuge (18) angeordnet sind, die um 180° drehsymmetrisch zur Längsachse (LA) der Pflückwalze (7l, 7r) angeordnet sind.

2. Pflückwalzeneinheit (6) nach Anspruch 1, **dadurch gekennzeichnet, dass** das jeweilige erste Werkzeug (15) zwei abgewinkelte Kanten (17) und das zweite Werkzeug (18) eine in radialer Richtung hervorstehende abgewinkelte Kante (20) aufweist.

3. Pflückwalzeneinheit (6) nach Anspruch 2, **dadurch gekennzeichnet, dass** die Kante (20) des zweiten Werkzeugs (18) mit einer benachbarten Kante (17) des ersten Werkzeugs (15) zwischen sich einen innerhalb des Hüllkreises (23) gelegenen Zwischenraum (25) einschließt, in welchen eine der Kanten (17) des ersten Werkzeugs (15) der benachbart gegenüberliegenden Pflückwalze (7l, 7r) während eines Umlaufs der beiden Pflückwalzen (7l, 7r) eintaucht.

4. Pflückwalzeneinheit (6) nach Anspruch 2 oder 3, **dadurch gekennzeichnet, dass** die Kanten (17, 20) der ersten und zweiten Werkzeuge (15, 18) einen identischen Hüllkreis (23) haben.

5. Pflückwalzeneinheit (6) nach einem der Ansprüche 1 bis 4, **dadurch gekennzeichnet, dass** die Kanten (17, 20) der ersten und zweiten Werkzeuge (15, 18) die Funktionen des Einziehens und Schneidens vereinen.

6. Pflückwalzeneinheit (6) nach einem der Ansprüche 1 bis 5, **dadurch gekennzeichnet, dass** die ersten Werkzeuge (15) der beiden Pflückwalzen (7l, 7r) einen im Wesentlichen wannenförmigen Querschnitt aufweisen und nach oben offenen ausgeführt sind.

7. Pflückwalzeneinheit (6) nach Anspruch 6, **dadurch gekennzeichnet, dass** die ersten Werkzeuge (15) einen Basisabschnitt (16) aufweisen und beiderseits des Basisabschnitts (16) die beiden abgewinkelt angeordneten Kanten (17).

8. Pflückwalzeneinheit (6) nach Anspruch 7, **dadurch gekennzeichnet, dass** die beiden abgewinkelten Kanten (17) des ersten Werkzeugs (15) einen gezahnten ersten Abschnitt (21) aufweisen, an den sich ein als durchgehende Schneidkante ausgebildeter zweiter Abschnitt (22) anschließt.

9. Pflückwalzeneinheit (6) nach einem der Ansprüche 2 bis 8, **dadurch gekennzeichnet, dass** die zweiten Werkzeuge (18) einen Basisabschnitt (19) aufweisen, an dem die eine Kante (20) des zweiten Werkzeugs (18) abgewinkelt angeordnet ist.

10. Pflückwalzeneinheit (6) nach Anspruch 9, **dadurch gekennzeichnet, dass** die abgewinkelte Kante (20) des zweiten Werkzeugs (18) einen gezahnten ersten Abschnitt (21) aufweist, an den sich ein als durchgehende Schneidkante ausgebildeter zweiter Abschnitt (22) anschließt.

11. Pflückwalzeneinheit (6) nach Anspruch 9, **dadurch gekennzeichnet, dass** die abgewinkelte Kante (20) des zweiten Werkzeugs (18) einen als durchgehende Schneidkante ausgebildeten Abschnitt aufweist.

12. Pflückwalzeneinheit (6) nach Anspruch 9 bis 11, **dadurch gekennzeichnet, dass** die abgewinkelten Kanten (17) des ersten Werkzeugs (15) gegen den Basisabschnitt (16) um einen Winkel (α) größer 90° abgewinkelt sind und die abgewinkelte Kante (20) des zweiten Werkzeugs (18) gegen den Basisabschnitt (19) um einen Winkel (β) größer 90° abgewinkelt ist, wobei der Winkel (β) der abgewinkelten Kante (20) des zweiten Werkzeugs (18) kleiner als der Winkel (α) der abgewinkelten Kanten (17) des ersten Werkzeugs (15) ist.

13. Pflückwalzeneinheit (6) nach einem der Ansprüche 8 bis 12, **dadurch gekennzeichnet, dass** sich der erste Abschnitt (21) des ersten Werkzeugs (15) und des zweiten Werkzeugs (18) über mindestens die Hälfte der Länge der Pflückwalzen (7l, 7r) oder ihrer abgewinkelten Kanten (17, 20) erstreckt.

14. Vorsatzgerät (1) zum Ernten von stängeligem Erntegut, welche zumindest eine Pflückwalzeneinheit (6), die einen aus zwei beabstandeten Pflückblechen ausgebildeten Pflückspalt sowie unterhalb des Pflückspalts angeordnete, gegenläufig angetriebene Pflückwalzen (7l, 7r) umfasst, **dadurch gekennzeichnet, dass** die Pflückwalzeneinheit (6) nach einem der Ansprüche 1 bis 13 ausgeführt ist.

15. Selbstfahrende Erntemaschine (2) mit einem Vorsatzgerät (1) zum Ernten von stängeligem Erntegut, welches nach Anspruch 14 ausgeführt ist.
